## Europäisches Patentamt
## European Patent Office
## Office européen des brevets

(19)

(11) Publication number: **0 220 787 B1**

(12) **EUROPEAN PATENT SPECIFICATION**

(45) Date of publication of the patent specification:
**31.10.90**

(51) Int. Cl.⁵: **C09K 3/10, H01M 8/02**

(21) Application number: **86201929.6**

(22) Date of filing: **29.09.83**

(60) Publication number of the earlier application in accordance with Art. 76 EPC: **0107397**

(54) **Process for making paste for sealing porous layers.**

(30) Priority: **30.09.82 US 430142**

(43) Date of publication of application:
**06.05.87 Bulletin 87/19**

(45) Publication of the grant of the patent:
**31.10.90 Bulletin 90/44**

(84) Designated Contracting States:
**AT BE CH DE FR GB IT LI LU NL SE**

(56) References cited:
**US-A- 4 028 324**
**US-A- 4 279 970**

(73) Proprietor: **ENGELHARD CORPORATION, Menlo Park, CN 40, Edison New Jersey 08818(US)**

(72) Inventor: **Feigenbaum, Haim, 149 North Seventh Avenue, Highland Park New Jersey(US)**
Inventor: **Pudick, Sheldon, 18 Schmitt Street, Sayreville New Jersey(US)**
Inventor: **Singh, Rajindar, 39 Corsa Terrace, Ridgewood New Jersey(US)**

(74) Representative: **Fisher, Adrian John et al, CARPMAELS & RANSFORD 43 Bloomsbury Square, London WC1A 2RA(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Reference is hereby made to other related patent applications which are assigned to the same assignee as the present application; Application of H. Feigenbaum and A. Kaufman entitled "Integral Gas Seal for A Fuel Cell Gas Distribution Plate", Serial No. 430,453, Filed on September 30, 1982, Application of H. Feigenbaum and S. Pudick entitled "A Process For Forming Integral Edge Seals In Porous Gas Distribution Plates Utilizing A Vibratory Means", Serial No. 430,291, Filed on September 30, 1982, and European Patent Application No. 83305884.5 (EP-A-0107397) from which the present application is divided.

The present invention relates to an improved process for making pastes which are suitable for sealing porous plates, such as the porous gas distribution plates of fuel cells.

It has been known for some time that fuel cells can be extremely advantageous as power supplies, particularly for certain applications such as a primary source of power in remote areas. It is highly desirable that any such fuel cell assembly be extremely reliable. Various fuel cell systems have been devised in the past to accomplish these purposes. Illustrative of such prior art fuel cells are those shown and described in U.S. Patents numbers 3,709,736, 3,453,149 and 4,175,165. A detailed analysis of fuel cell technology comparing a number of different types of fuel cells appears in the "Energy Technology Handbook" by Douglas M. Consadine, published in 1977 by McGraw Hill Book Company at pages 4-59 to 4-73.

U.S. Patent number 3,709,736, assigned to the assignee of the present invention, describes a fuel cell system which includes a stacked configuration comprising alternating fuel cell laminates and electrically and thermally conductive impervious cell plates. The laminates include fuel and oxygen electrodes on either side of an electrolyte comprising an immobilized acid. U.S. Patent 3,453,149, assigned to the assignee of this invention, is illustrative of such an immobilized acid electrolyte. In U.S. Patent 4,175,165, assigned to the assignee of the present invention, a stacked array of fuel cells is described wherein gas distribution plates includes a plurality of gas flow channels or grooves with the grooves for the hydrogen gas distribution being arranged orthogonally relative to the grooves for the oxygen distribution. The gas distribution plates themselves, whether they are individual termination plates for one or the other of the gases or bi-polar plates for distributing both gases, are formed of an electrically conductive impervious material.

In more recent designs, the gas distribution plates, which are sometimes called A-plates, are formed of a porous material so that a more uniform and complete flow of gas over the electrode surface is provided. In previous systems where nonporous gas distribution plates were utilized, the reactants always flowed only through the grooves and were contained by the walls thereof. However, in the more recent systems utilizing porous plates, it has been necessary to seal the edges of the plate before it was assembled into the cell to prevent the reactant gases from exiting through the plate edges and mixing together. If leakage did occur, the cells could operate improperly or fail altogether.

In a prior art sealing technique, gas distribution plates were edge-sealed with a paste containing silicon carbide, polytetrafluoroethylene (PTFE) and polyethylene oxide (Polyox). The liquid in the grooves was oven-dried for 10-15 minutes to drive off the solvents. Usually, this process is repeated a few times to account for shrinkage.

At the end of this cycle, the edge-sealant was sintered at 290°C for 5 minutes. Sintering helped polymerize the PTFE which bonds the silicon carbide together. There were several aspects of this process that needed improvement. These include (I) the technique is time consuming because of the repetitive nature of the process to fill all the visible voids, (2) the technique creates the possibility of voids occurring due to shrinkage and (3) the technique produces questionable long term stability because under long term operating conditions at high temperatures some voids may reappear.

The sealing pastes according to the document US-A 4 279 970 contain silicon carbide having a mean particle size of 2 μm associated with polytetrafluoroethylene in colloidal form but no phosphoric acid is added; the sintering occurs in situ at the assembly of the electrochemical cell.

European Patent Application No. 83305884.5 provides an improved edge-sealing method which involves the use of a member of resinous material arranged in a groove extending along an edge of a gas-distribution plate, and a gas impervious paste surrounding the member. The present invention provides a process for making such a paste.

According to the present invention, there is provided a process for making a paste for use in sealing porous plates comprising:

(a) mixing silicon carbide powder, polyethylene oxide and polytetrafluoroethylene together to form a paste mixture
(b) sintering the mixture
(c) adding concentrated phosphoric acid, and
(d) mixing said acid with said sintered mixture to form a paste of uniform consistency.

Preferably, the paste mixture is formed into a thin layer before sintering.

The silicon carbide is advantageously in the 1000-1500 mesh size, and the polytetrafluoroethylene is preferably in the form of fibres.

When the edge-sealing method disclosed in European Patent Application No. 83305884.5 is employed using a paste made in accordance with the present invention, the problem of voids occurring due to shrinkage during the the sealing process and under long-term usage is avoided.

The following is an example of a method of making a paste in accordance with the present invention:

About 96 gm Polyox (polyethylene oxide), about 152 gm SiC powder (1500 mesh) and about 10 ml of PT-FE (T-30) are mixed and passed through about 0.076 mm (3 mil) rollers. The mix is spread in a thin layer over a flat plate and sintered at about 290°C for at least 30 minutes or until powdery, usually about 45 minutes. 105% phosphoric acid in the ratio of about 100 gm powder to about 105-110 ml of acid is added and mixed thoroughly until a smooth paste of uniform consistency is formed.

The paste may be applied to an edge seal groove as described in European Patent Application No. 83305884.5.

The patents and publications described herein above are intended to be incorporated by reference herein. This invention may be embodied in other forms or carried out in other ways without departing from the spirit or essential characteristics thereof. The present embodiments are therefore to be considered as in all respects illustrative and not restrictive, the scope of the invention being indicated by the appended claims.

## Claims

1. A process for making a paste for use in sealing porous plates comprising:
(a) mixing silicon carbide powder, polyethylene oxide and polytetrafluoroethylene together to form a paste mixture
(b) sintering the mixture
(c) adding concentrated phosphoric acid, and
(d) mixing said acid with said sintered mixture to form a paste of uniform consistency.

2. A process as in Claim 1 further including the step of forming the paste mixture into a thin layer before sintering.

3. A process as in Claim 1 or Claim 2 wherein the silicon carbide powder is of 1000 to 1500 mesh size.

4. A process as in Claim 1, 2 or 3 wherein the polytetrafluoroethylene is in the form of fibres.

5. A process as in any preceding claim wherein the phosphoric acid is 105% w/v.

6. A process as in any preceding claim wherein the mixture is sintered at about 290°C for at least 30 minutes.

## Patentansprüche

1. Verfahren zur Herstellung einer Paste zur Verwendung in der Abdichtung von porösen Platten, umfassend die folgenden Stufen:
(a) Zusammenmischen von Siliciumcarbidpulver, Polyethylenoxid und Polytetrafluorethylen unter Ausbildung einer Pastenmischung,
(b) Sintern der Mischung,
(c) Zusetzen von konzentrierter Phosphorsäure und
(d) Vermischen der Säure mit der gesinterten Mischung zur Ausbildung einer Paste mit gleichförmiger Konsistenz.

2. Verfahren nach Anspruch 1, welches zusätzlich die Stufe der Verformung der Pastenmischung zu einer dünnen Schicht vor dem Sintern umfaßt.

3. Verfahren nach Anspruch 1 oder 2, worin das Siliziumcarbidpulver eine Teilchengröße von 1000 bis 1500 Maschen aufweist.

4. Verfahren nach Anspruch 1, 2 oder 3, worin das Polytetrafluorethylen in Form von Fasern vorliegt.

5. Verfahren nach einem vorstehenden Anspruch, worin die Phosphorsäure 105%ig Gewicht/Volumen) ist.

6. Verfahren nach einem vorstehenden Anspruch, worin die Mischung bei etwa 290°C während wenigstens 30 Minuten gesintert wird.

## Revendications

1. Procédé de préparation d'une pâte pour rendre étanches des plaques poreuses, qui implique de:
(a) mélanger une poudre de carbure de silicium, de l'oxyde de polyéthylène et le polytetrafluoréthylène ensemble pour former un mélange de pâte,
(b) fritter le mélange,
(c) ajouter de l'acide phosphorique concentré, et
(d) mélanger ledit acide avec ledit mélange fritté pour former une pâte de consistance uniforme.

2. Procédé selon la revendication 1, comportant également l'étape de formation du mélange pâteux en une couche mince avant frittage.

3. Procédé selon la revendication 1 ou 2, dans lequel la poudre de carbure de silicium est d'une granulométrie de 1000 à 1500 mesh.

4. Procédé selon la revendication 1, 2 ou 3, dans lequel le polytetrafluoréthylène est sous forme de fibres.

5. Procédé selon l'une quelconque des revendications précédentes, dans lequel l'acide phosphorique est de 105% poids/volume.

6. Procédé selon l'une quelconque des revendications précédentes, dans lequel on fritte le mélange à environ 290°C pendant un minimum de 30 minutes.